Europäisches Patentamt

European Patent Office

Office européen des brevets

(19)

(11) **EP 0 461 018 B2**

(12) **NOUVEAU FASCICULE DE BREVET EUROPEEN**

(45) Date de publication et mention de la décision concernant l'opposition:
**18.03.1998   Bulletin 1998/12**

(45) Mention de la délivrance du brevet:
**21.09.1994   Bulletin 1994/38**

(21) Numéro de dépôt: **91401439.4**

(22) Date de dépôt: **03.06.1991**

(51) Int Cl.6: **G01B 17/02**, G01N 29/00

(54) **Procédé et dispositif de contrôle de l'épaisseur et de la cohésion de l'interface d'un tube duplex**

Verfahren und Vorrichtung zur Kontrolle der Dicke und der Kohäsion der Verbindung eines Duplexrohrs

Method and device for controlling the thickness and cohesion of a duplex tube interface

(84) Etats contractants désignés:
**BE DE ES GB SE**

(30) Priorité:  **08.06.1990  FR 9007187**

(43) Date de publication de la demande:
**11.12.1991   Bulletin 1991/50**

(73) Titulaires:
- **FRAMATOME**
  **92400 Courbevoie (FR)**
- **COGEMA**
  **F-78141 Velizy Villacoublay (FR)**
- **SOCIETE EN NOM COLLECTIF ZIRCOTUBE**
  **F-92400 Courbevoie (FR)**

(72) Inventeur: **Desruelles, Didier**
**F-73460 Gresy-sur-Isere (FR)**

(74) Mandataire: **Bouget, Lucien et al**
**Cabinet Lavoix**
**2, Place d'Estienne d'Orves**
**75441 Paris Cédex 09 (FR)**

(56) Documents cités:
**EP-A- 301 906                    EP-A- 0 206 296**
**DE-A- 3 629 174**

- **MESURES, no. 601, 30 janvier 1989, Paris, FR, pages 53-60; J.-F. CROS: "La mesure d'épaisseurs par ultrasons"**
- **ELECTRONICS, vol. 59, no. 27, 24 juillet 1986, New York, US, pages 36-38; W. R.IVERSEN: 'MIT Ice Detector Taxis For Takeoff"**
- **Materials evaluation, J. Renken and R.H. Selner: "Retrofractory Metal Tubing Inspection Using Ultrasonic and Pulsed Eddy Current Methods", pp. 257-262, May 1966**

EP 0 461 018 B2

## Description

L'invention concerne un procédé et un dispositif de contrôle de l'épaisseur et de la cohésion de l'interface d'un tube duplex et en particulier d'un tube duplex en alliage de zirconium utilisé comme élément de gainage d'un crayon combustible d'un assemblage pour un réacteur nudéaire refroidi à l'eau.

Les assemblages combustibles des réacteurs nudéaires refroidis à l'eau et en particulier des réacteurs nudéaires à eau sous pression comportent une ossature dans laquelle sont introduits des crayons combustibles constitués par une gaine renfermant un matériau combustible nudéaire tel qu'un oxyde d'uranium ou de plutonium sous forme de pastilles frittées.

La gaine réalisée à partir d'un tube en alliage de zirconium doit présenter une bonne résistance à la corrosion sous l'effet du fluide primaire en circulation en contact avec la surface extérieure de la gaine.

On utilise de manière habituelle pour constituer la gaine des crayons combustibles des assemblages des réacteurs refroidis à l'eau, un alliage à base de zirconium renfermant principalement de l'étain et du fer.

Afin d'améliorer la tenue à la corrosion sous irradiation des gaines de crayons combustibles, dans l'ambiance du réacteur nudéaire en fonctionnement, et d'augmenter ainsi la durée de vie des assemblages combustibles dans le coeur, on a proposé des modifications ou ajustements de la composition des alliages de zirconium ou encore de remplacer ces alliages renfermant de l'étain, du fer et du chrome par des alliages renfermant d'autres éléments tels que le vanadium, le niobium ou le cuivre.

On a également proposé, par exemple dans la demande de brevet EP-A-0.212.351, de réaliser la gaine sous la forme d'un tube duplex comportant une âme intérieure tubulaire en un alliage de zirconium de type dassique tel que décrit plus haut et une couche de surface constituée par un placage ou un revêtement améliorant la tenue à la corrosion de la gaine.

L'alliage de zirconium constituant la couche de placage ou de revêtement est différent de l'alliage constituant l'âme du tube et renferme du fer ainsi que l'un au moins des éléments vanadium, platine et cuivre. Cette couche de surface dont l'épaisseur représente de 5 à 20 % de l'épaisseur totale de la paroi de la gaine peut être réalisée par extrusion d'une ébauche constituée par un tube intérieur en alliage de zirconium de composition dassique sur lequel est enfilé un tube extérieur ayant la composition de la couche de surface.

La gaine est ensuite laminée sur un laminoir à pas de pèlerin jusqu'à son diamètre définitif.

Plus récemment, on a proposé dans la demande de brevet FR-A-89-00761 déposée conjointement par les Sociétés FRAMATOME, COGEMA, CEZUS et ZIRCOTUBE, un tube duplex dont la couche de surface présentant une épaisseur comprise entre 10 et 25 % de l'épaisseur totale de la paroi de la gaine est constituée par un alliage à base de zirconium contenant de l'étain, du fer et du niobium ou du vanadium. L'arme tubulaire du tube duplex peut être réalisée en un alliage de zirconium dassique dans le cas de la fabrication des gaines pour crayons combustibles ou en un alliage à base de zirconium contenant principalement du niobium comme élément d'alliage.

Dans tous les cas, il est nécessaire de s'assurer de la parfaite qualité des tubes duplex qui sont destinés à constituer des gaines pour crayons combustibles, en particulier en ce qui concerne le diamètre du tube, l'épaisseur totale de la gaine, l'épaisseur de la couche externe de placage et la cohésion de la zone d'interface entre la couche plaquée et l'âme du tube.

Des contrôles doivent être effectués en usine, sur de très grandes quantités de tubes dont le diamètre est très faible par rapport à la longueur.

Le contrôle du diamètre et de l'épaisseur totale de la gaine peut être effectué en utilisant une technique dassique consistant à mesurer la différence des temps de propagation d'ondes ultrasonores, de forme impulsionnelle, qui sont réfléchies par la surface externe et par la surface interne du tube.

Cette technique de contrôle et de mesure ultrasonore connue sous le nom de technique par "pulse-écho" est éventuellement adaptée pour tenir compte de la couche de placage, dans le calcul de l'épaisseur totale de la gaine.

On a également proposé d'utiliser une technique utilisant des ondes ultrasonores pour contrôler l'épaisseur du placage d'un tube duplex à base d'alliage de zirconium.

Cette technique décrite dans le FR-A-2.629.586 déposé au nom de la Société CEZUS met en oeuvre un contrôle par onde ultrasonore adapté à la mesure d'une couche de faible épaisseur dont les caractéristiques sur le plan acoustique sont très voisines de celles de l'âme du tube de plus forte épaisseur.

Cette technique perfectionnée ne permet cependant pas de mesurer des épaisseurs de placage inférieures à 0,4 mm, dans la mesure où la mise en oeuvre industrielle du procédé dans des conditions satisfaisantes nécessite l'utilisation d'ondes ultrasonores dont la fréquence ne dépasse pas 20 MHz.

Dans le cas d'une couche de placage dont l'épaisseur est comprise entre 80 et 100 $\mu$m, ce qui correspond aux conditions rencontrées le plus fréquemment dans le cas des tubes duplex utilisés comme matériau de gainage, il serait nécessaire de mettre en oeuvre des ondes ultrasonores à très hautes fréquences (par exemple de l'ordre de 100 MHz) ce qui rend l'application du procédé extrêmement difficile dans un contexte industriel.

En outre, dans le cas des gaines pour crayons combustibles, la couche de placage et l'âme tubulaire du tube duplex sont constituées par des alliages à base de zirconium très faiblement alliés qui ont des propriétés acoustiques très proches, si bien que le coefficient de réflexion des ondes acoustiques à l'interface placage-âme est très faible (généralement inférieur à 2 %). L'écho d'interface est alors très faible et se trouve noyé dans le bruit acoustique et électronique du signal ultrasonore.

On a proposé dans le FR-A-2.534.015 un procédé et un appareil de mesure permettant de déterminer l'épaisseur d'un revêtement de zirconium sur un tube en alliage de zirconium mettant en oeuvre l'analyse et la mesure de courants induits dans la couche de placage du tube duplex, par induction magnétique, en utilisant un courant d'excitation dont la fréquence est choisie en fonction de l'épaisseur nominale de la couche de placage ou de revêtement du tube.

La fréquence choisie et le traitement des signaux correspondant aux courants induits permettent également d'éliminer, dans une certaine mesure, les erreurs de mesure résultant d'une variation de la largeur de l'entrefer entre la bobine excitatrice et la paroi du tube.

Cette technique d'une mise en oeuvre relativement complexe ne permet cependant pas de compenser les variations de conductivité du matériau constituant l'âme du tube et les variations de conductivité du matériau constituant le placage.

En outre, cette technique ne permet pas d'effectuer à elle seule un contrôle de l'épaisseur totale du tube et de la cohésion de la zone d'interface entre la couche de placage ou de revêtement du tube et l'âme tubulaire.

Le but de l'invention est donc de proposer un procédé de contrôle de l'épaisseur et de la cohésion de l'interface d'un tube duplex comportant une âme tubulaire en un alliage tel qu'un alliage de zirconium recouverte par une couche de revêtement ou de placage en un alliage dont le métal de base est identique au métal de base de l'alliage constituant l'âme tubulaire dans lequel, pour différentes zones de mesure et de contrôle suivant la circonférence ou la longueur du tube, on effectue de manière continue ou discontinue les opérations suivantes :

- on émet des ondes ultrasonores de manière que ces ondes se propagent dans le revêtement et dans l'âme du tube dans des directions sensiblement radiales,
- on recueille les ondes ultrasonores réfléchies par les surfaces interne et externe du tube, par son interface entre l'âme et le revêtement et par des défauts de cohésion éventuels à l'interface, ou transmises par la couche de revêtement ou de placage,
- on mesure le temps de propagation des ondes ultrasonores dans l'épaisseur du tube,
- on détermine l'amplitude et la forme des ondes réfléchies,

ce procédé permettant de contrôler les dimensions géométriques du tube duplex et en particulier son épaisseur totale, l'épaisseur de la couche de revêtement et de placage et de détecter les défauts de cohésion à l'interface entre la couche de revêtement ou de placage et l'âme tubulaire.

Dans ce but,

- on soumet le tube, depuis sa surface externe, à une induction magnétique créée par un courant sinusoïdal multifréquence,
- on effectue des mesures de phase et/ou d'amplitude des courants induits dans le tube, appelés courants de Foucault,
- on en déduit l'épaisseur de la couche de revêtement,
- on calcule l'épaisseur totale $e_g$ de la paroi du tube duplex à partir de la formule :

$$e_g = e_p + (\delta t - e_p/V_p) \times V_a$$

dans laquelle :

$e_p$ représente l'épaisseur de la couche de revêtement ou de placage mesurée par courants de Foucault,
$V_p$ la vitesse des ondes ultrasonores dans la couche de placage ou de revêtement,
$V_a$ la vitesse des ondes ultrasonores dans le matériau constituant l'âme du tube,
et $\delta t$ le temps de propagation des ondes ultrasonores dans l'épaisseur totale du tube,

- et on détermine la cohésion du tube à son interface par analyse de l'amplitude et de la forme des ondes ultrasonores réfléchies par l'interface ou transmises par la couche de revêtement ou de placage.

Afin de bien faire comprendre l'invention, on va maintenant décrire, à titre d'exemple non limitatif, en se référant aux figures jointes en annexe, plusieurs modes de réalisation du procédé suivant l'invention et un dispositif correspondant destiné en particulier à mesurer l'épaisseur de la couche de revêtement ou de placage par courants de Foucault.

La figure 1 est une vue en perspective éclatée d'une partie d'un tube duplex utilisé comme élément de gainage d'un crayon combustible, auquel s'applique le procédé suivant l'invention.

La figure 2A est une vue en coupe de la paroi d'un tube duplex montrant de manière schématique la mise en oeuvre d'un procédé de mesure d'épaisseur, à partir des temps de propagation d'ondes ultrasonores dans la paroi du tube.

La figure 2B est un diagramme donnant l'amplitude des ondes ultrasonores réfléchies par les parois du tube représenté sur la figure 2A, en fonction du temps.

Les figures 3A, 3B et 3C montrent trois variantes de réalisation d'un dispositif de mesure par courants de Foucault, de l'épaisseur de la couche de revêtement ou de placage d'un tube duplex.

Les figures 4A et 4B, 5A et 5B et 6A et 6B respectivement sont des vues analogues aux figures 2A et 2B montrant la mise en oeuvre du procédé de détection de défauts de cohésion à l'interface entre la couche de revêtement ou de placage et l'âme d'un tube duplex, par une technique ultrasonore, suivant trois variantes connues.

Les figures 7A et 7B ainsi que les figure 8A et 8B sont des vues analogues aux figures 2A et 2B respectivement montrant la mise en oeuvre d'un procédé de détection de défauts à l'interface entre une couche de revêtement ou de placage et l'âme métallique d'un tube duplex, par une technique ultrasonore par transmission, suivant l'invention.

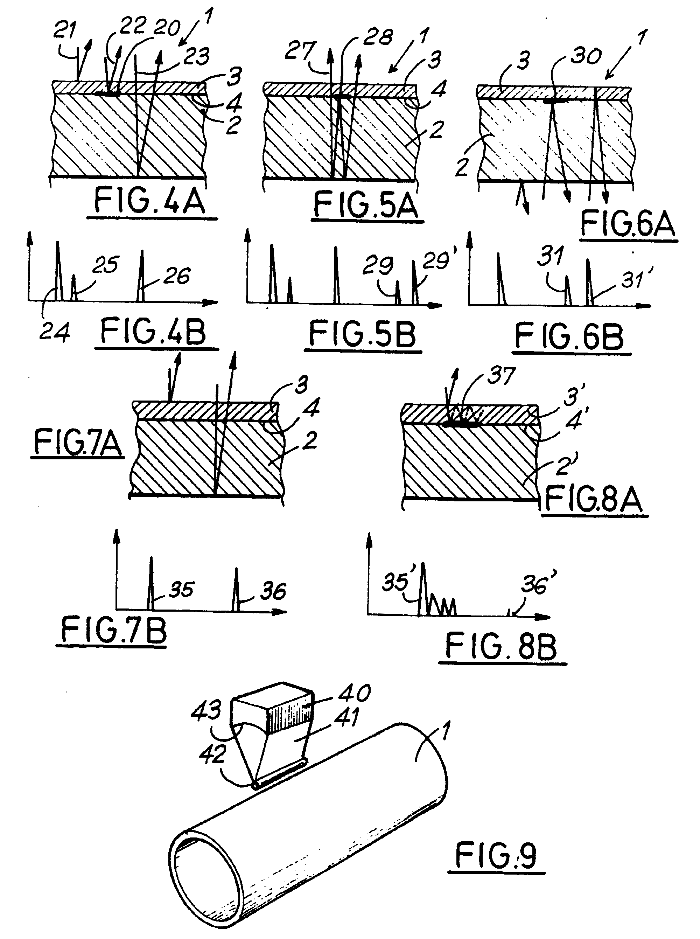

Les figures 7A et 7B sont relatives à une zone d'un tube ne présentant pas de défauts d'interface.

Les figures 8A et 8B sont relatives à une zone d'un tube présentant un défaut d'interface et à sa détection par transmission d'ondes ultrasonores.

La figure 9 est une vue en perspective d'un dispositif de détection par ultrasons des défauts de l'interface d'un tube duplex.

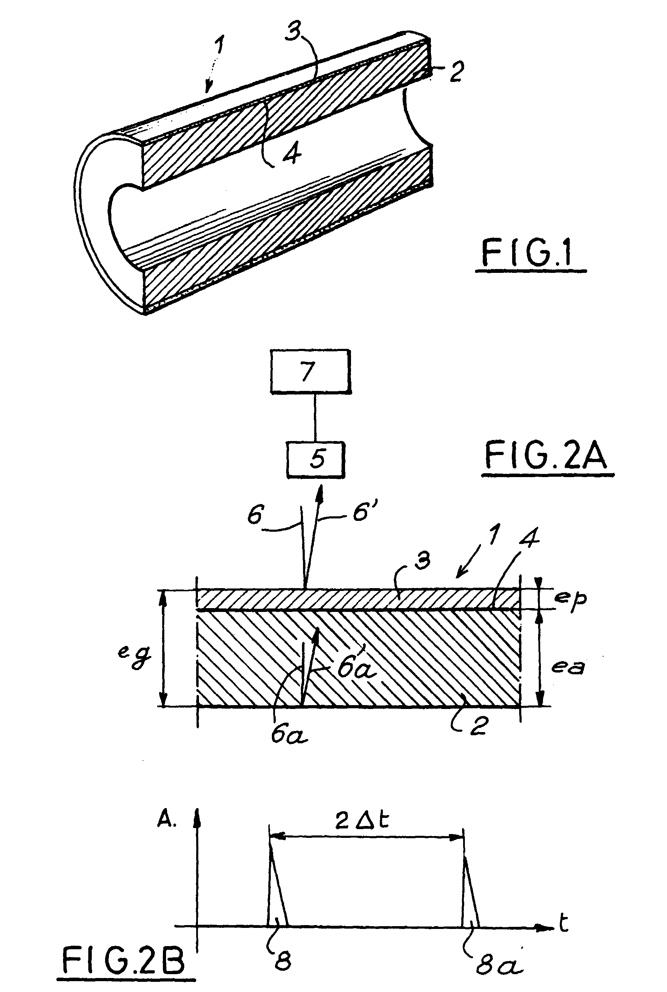

Sur la figure 1, on voit un tube duplex désigné de manière générale par le repère 1 et comportant une âme tubulaire 2 en un alliage de zirconium recouvert extérieurement par une couche de placage 3 en un second alliage de zirconium dont la composition est différente de la composition de l'alliage constituant l'âme 2.

Les alliages de zirconium constituant l'âme 2 et la couche de placage 3 du tube duplex 1 sont des alliages de zirconium faiblement alliés dont les teneurs en éléments d'alliage sont inférieures à 1 % en poids pour chacun de ces éléments.

L'âme tubulaire 2 et la couche de placage 3 présentent donc des propriétés acoustiques extrêmement proches les unes des autres. En outre, la couche de revêtement ou de placage 3 présente une épaisseur faible, généralement comprise entre 60 et 80 μm, l'âme métallique 2 ayant elle-même une épaisseur légèrement inférieure à 600 μm.

Un tube duplex tel que représenté sur la figure 1 utilisé comme gaine d'un crayon combustible d'un assemblage d'un réacteur nucléaire à eau sous pression présente généralement un diamètre extérieur de l'ordre de 10 mm et une longueur de l'ordre de 4 m.

Sur la figure 2A, on a représenté en coupe, la paroi d'un tube duplex tel que représenté sur la figure 1 comportant une âme tubulaire 2 recouverte par une couche de placage et de revêtement liée à l'âme métallique, suivant une surface cylindrique d'interface 4.

Pour mesurer l'épaisseur totale de la paroi de la gaine constituée par l'âme 2 et la couche de placage 3, on utilise un transducteur ultrasonore 5 émettant un faisceau d'ondes ultrasonores 6 en direction de la surface externe du tube duplex constituée par la surface extérieure de la couche de placage 3.

Le tube 1 est plongé dans un milieu de couplage constitué par un liquide permettant la transmission des ondes ultrasonores émises par le transducteur 5.

Une partie du faisceau d'ondes ultrasonores 6 est réfléchie par la surface extérieure du tube duplex sous la forme d'un faisceau 6' qui est capté par le transducteur 5 et transformé en un signal électrique qui est transmis à une unité de traitement 7.

L'écho 8 correspondant peut être visualisé sur un oscillogramme donnant une image de son amplitude et de sa position sur l'échelle des temps.

Le faisceau ultrasonore 6'a transmis à travers la paroi du tube duplex est réfléchi, sous la forme d'un faisceau 6'a, par la surface intérieure de l'âme 2 du tube duplex.

Le faisceau ultrasonore 6'a est capté par le transducteur 5 qui le transforme en signal électrique et permet, grâce au module de traitement 7, sa visualisation sur l'oscillogramme de la figure 2B, sous la forme du signal d'écho 8a.

Le décalage temporel entre le signal 8 et le signal 8a correspond au double du temps de parcours $\delta T$ des ondes ultrasonores à travers la paroi du tube 1.

On peut obtenir une valeur approchée de l'épaisseur totale $e_g$ de la gaine correspondant a' l'épaisseur de la paroi du tube duplex en supposant que les vitesses de propagation des ondes ultrasonores dans l'âme métallique de la gaine et dans la couche de placage sont identiques.

Cette méthode de détermination n'est qu'approximative; dans la mesure où la vitesse de propagation $V_p$ des ondes ultrasonores longitudinales dans le matériau de placage n'est pas identique à la vitesse de propagation $V_a$ des ondes ultrasonores dans le matériau constituant l'âme du tube duplex

En revanche, la méthode de mesure directe du temps de propagation d'ondes ultrasonores ne permet pas de mesurer l'épaisseur de la couche de placage $e_p$, le coefficient de réflexion des ondes acoustiques à l'interface 4 entre la couche de placage 3 et l'âme 2 étant très faible (généralement inférieur à 2 %), du fait que les propriétés acoustiques des matériaux constituant la couche de placage et l'âme sont extrêmement proches les unes des autres.

En outre, la couche de placage présente une épaisseur faible par rapport à l'épaisseur totale de la paroi, si bien que les différences de temps de propagation à prendre en compte sont elle-même très faibles.

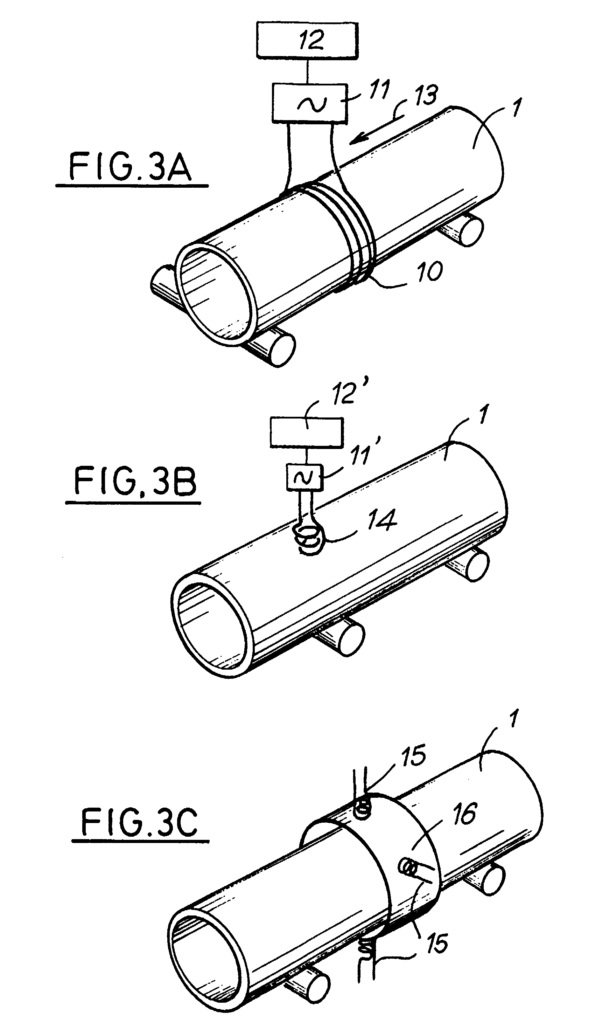

Sur les figures 3A, 3B et 3C, on a représenté trois modes de réalisation différents d'un dispositif à courants de Foucault permettant de mesurer l'épaisseur d'une couche de placage externe d'un tube duplex 1 constitué par une âme métallique recouverte par une couche de placage, l'âme métallique et la couche de placage étant constituées par deux alliages de zirconium renfermant de très faibles quantités d'éléments d'alliage.

Des variations faibles en éléments d'alliage, dans des alliages faiblement alliés, peuvent entraîner des variations très importantes de la conductivité électrique de ces alliages.

Par exemple, dans le cas du Zircaloy qui est un alliage de zirconium renfermant de l'étain, une variation de 1 % de la teneur en étain entraîne une variation de conductivité de l'ordre de 50 %.

De telles variations permettent d'appliquer la technique des courants induits ou courants de Foucault pour effectuer un contrôle d'épaisseur d'une couche de placage dont la composition est différente de celle de l'âme métallique revêtue par la couche de placage.

Il est possible d'utiliser, comme représenté sur la figure 3A, une bobine 10 comportant un certain nombre de spires entourant le tube 1.

La bobine est alimentée par un courant d'excitation sinusoïdal multifréquence par l'intermédiare d'une source de courant 11 reliée à ses bornes. Les signaux électriques correspondant aux courants induits sont traités par une unité de traitement 12.

Dans le cas de ce premier mode de réalisation du dispositif de mesure par courants de Foucault, on mesure en fait la valeur moyenne de l'épaisseur du placage qui intègre les variations possibles d'épaisseur selon la circonférence du tube ou variations circonférentielles. On intègre également les variations d'épaisseur suivant la longueur de la bobine 10 ou variations axiales.

Selon ce principe, la mesure est également sensible au centrage du tube à l'intérieur de la bobine constituant la sonde à courants de Foucault, si bien que ce centrage, même réalisé de manière optimisée, risque de diminuer la précision de la mesure.

Une deuxième technique de mesure telle que représentée sur la figure 3B consiste à utiliser une bobine 14 dont l'axe présente une direction radiale par rapport au tube1.

L'excitation de la bobine par un courant sinusoïdal multifréquence, grâce à une source de courant 11', et le traitement des signaux correspondant aux courants induits par une unité de traitement 12' sont réalisés de la même manière que dans le cas du dispositif de mesure représenté sur la figure 3A.

Le dispositif tel que représenté sur la figure 3B permet d'effectuer une mesure locale de l'épaisseur du placage du tube 1.

Comme représenté sur la figure 3C, il est également possible d'utiliser plusieurs bobines 15 analogues à la bobine 14 représentée sur la figure 3B et fixées sur un support commun 16, de manière que les bobines 15 dont les axes ont des directions radiales par rapport au tube 1, soient disposées autour du tube, dans des positions circonférentielles régulièrement réparties.

On peut ainsi effectuer simultanément des mesures d'épaisseur en divers points répartis suivant la circonférence du tube.

Il est bien évident également qu'il est possible d'effectuer un balayage de la surface du tube, par exemple en déplaçant ce tube dans la direction axiale par rapport à la sonde à courants de Foucault, comme représenté par la flèche 13 sur la figure 3A.

La fréquence du signal sinusoïdal d'excitation ainsi que les dimensions des bobinages (diamètre et hauteur) sont déterminées de façon à optimiser la sensibilité des mesures aux variations d'épaisseur du placage et à minimiser les variations des signaux de mesures dues aux variations de la distance entre la bobine et la surface du tube, constituant un entrefer.

Cet effet d'entrefer ou "lift-off" peut être considérablement réduit par un choix judicieux de la fréquence, comme il est indiqué dans la demande de brevet FR-A-2.534.015.

Pour améliorer la qualité de la mesure et notamment pour tenir compte des variations possibles de conductivité électrique des alliages constituant l'âme et le placage des tubes, cette conductivité électrique étant très sensible à la composition des alliages, on peut utiliser en complément à la fréquence principale d'excitation telle que définie ci-dessus une ou plusieurs fréquences auxiliaires destinées à compenser les variations de composition sur un même tube ou au sein d'un même lot de tubes ou d'une même coulée.

Le procédé suivant l'invention se caractérise donc par l'utilisation d'un signal d'excitation sinusoïdal multifréquence comportant une fréquence principale ainsi que des fréquences secondaires.

On peut en particulier utiliser une deuxième fréquence sensible à la variation moyenne de conductivité des alliages constituant l'âme et le placage, cette deuxième fréquence n'étant pas sensible ou présentant une sensibilité très faible aux variations d'épaisseur de l'âme et du placage.

On peut également utiliser deux fréquences auxiliaires dont l'une est sensible à la variation de conductivité du matériau de base constituant l'âme tout en étant très peu sensible aux variations de conductivité du placage ainsi qu'aux variations d'épaisseur de l'âme et du placage et dont l'autre est sensible uniquement aux variations de conductivité du placage.

Il est également possible d'utiliser une fréquence complémentaire pour effectuer les mesures et les compensations de l'effet de lift-off.

La sonde est excitée simultanément par chacun des signaux sinusoïdaux présentant les fréquences déterminées de la manière décrite ci-dessus et les signaux de mesure de phase et d'amplitude correspondant à chacun des signaux sinusoïdaux de fréquence déterminée sont numérisés et traités, comme indiqué ci-dessus par un module de traitement et par des moyens informatiques permettant de déduire de ces signaux la valeur de l'épaisseur du placage.

La mesure de l'épaisseur du placage est obtenue soit par analyse de phase du signal correspondant aux courants de Foucault, cette méthode présentant l'avantage d'être moins sensible aux variations de lift-off, soit par une analyse combinée de la phase et de l'amplitude des signaux correspondant aux courants de Foucault.

De manière générale, le dispositif utilisé pour mesurer l'épaisseur du placage par courants de Foucault comprend :

- une tête de contrôle contenant les sondes à courants de Foucault et assurant le positionnement de ces sondes sur le tube ainsi qu'un guidage précis du tube,

- au moins une sonde à courants de Foucault fixée sur la tête de contrôle,

- une source de courant sinuscidal d'excitation multifréquence,

- des moyens mécaniques d'entraînement et de guidage précis des tubes à travers la tête de contrôle,

- des moyens de grande précision de contrôle de l'avance linéaire des tubes et de mesure de leur position axiale,

- et des moyens d'acquisition et de traitement informatique des mesures de courants de Foucault effectuées.

L'obtention d'une valeur précise de l'épaisseur $e_p$ du placage mesurée par courants de Foucault et la mesure du temps de parcours $\delta t$ d'une onde ultrasonore longitudinale se propageant dans l'épaisseur totale de la gaine dans une direction normale à la surface, tel que représenté sur les figures 2A et 2B, permet d'obtenir une valeur précise de l'épaisseur totale de la gaine.

Cette épaisseur totale de la gaine $e_g$ est donnée par la formule $e_g = e_p + (\delta t - e_p/V_p) \times V_a$,
expression dans laquelle $e_p$ représente l'épaisseur du placage mesurée par courants de Foucault, $V_p$ la vitesse des ondes ultrasonores longitudinales dans le matériau de placage, $V_a$ la vitesse des ondes ultrasonores longitudinales dans le matériau de l'âme du tube et $\delta t$ le temps de propagation de l'onde ultrasonore dans l'épaisseur totale de la gaine.

Dans cette expression, $e_p/V_p$ représente le temps de parcours de l'onde ultrasonore dans le matériau de placage, $(\delta t - e_p/V_p)$ représente le temps de parcours de l'onde ultrasonore dans l'âme du tube, $(\delta t - e_p/V_p) \times V_a$ représente l'épaisseur de l'âme, pour une position axiale du tube parfaitement déterminée grâce aux moyens de contrôle et de mesure de position axiale.

Il est bien entendu que ce calcul n'est justifié que dans le cas où les visses $V_p$ et $V_a$ sont suffisamment différentes pour entraîner des erreurs significatives, lors de la mesure et du calcul de l'épaisseur du tube.

Le procédé suivant l'invention permet également une détection des défauts de cohésion à l'interface entre le placage et l'âme du tube.

Les défauts de cohésion sont plans, d'épaisseur négligeable et disposés parallèlement à la surface du tube.

Il serait donc très difficile de détecter ces défauts par courants de Foucault.

Une technique de détection par ultrasons est donc mieux adaptée, bien que la très faible profondeur du défaut sous la surface du tube, correspondant à l'épaisseur de la couche de placage (comprise entre 80 et 100 µm) constitue une difficulté dans la détection des défauts de cohésion à l'interface.

Il est possible d'utiliser des techniques de détection par réflexion d'ondes ultrasonores qui sont connues en elles-mêmes et qui sont représentées sur les figures 4A, 5A et 5A et sur les oscillogrammes correspondants des figures 4B, 5B et 6B.

Le principal inconvénient de ces techniques de détection par réflexion réside dans la nécessité d'utiliser des ultrasons à très haute fréquence, par exemple à une fréquence supérieure à 100 MHz, ce qui correspond à des longueurs d'ondes dans le zirconium inférieures à 50 µm.

Selon une première technique de détection par réflexion représentée sur les figures 4A et 4B, on émet des ondes ultrasonores dans des directions sensiblement radiales par rapport au tube, c'est-à-dire avec une incidence sensiblement normale.

Sur la figure 4A, on a représenté un faisceau d'ultrasons 21 se réfléchissant sur la surface extérieure du tube, un faisceau d'ultrasons 22 se réfléchissant sur un défaut 20 situé suivant l'interface 4 entre la couche de placage 3 et l'âme 2 du tube et un faisceau 23 se réfléchissant sur la surface intérieure du tube, les échos correspondants 24, 25 et 26 étant représentes sur la figure 4B.

Le signal d'écho 26 réfléchi par la surface Interne du tube présente une amplitude moindre par rapport au signal 24 réfléchi par la surface extérieure du tube. Le décalage temporel entre ces deux échos correspond au double du temps de parcours des ondes ultrasonores dans l'épaisseur du tube.

Le signal d'écho 25 correspondant à une réflexion sur un défaut 20 suivant l'interface 4 présente une amplitude moindre et un très faible décalage temporel par rapport au signal réfléchi sur la surface extérieure du tube, du fait de la très faible épaisseur de la couche 3 de placage.

Cette première méthode de détection est donc limitée par le fait que le défaut est très proche de la surface extérieure du tube et donc que l'écho 25 correspondant peut être mélangé avec l'écho 24 qui a une largeur temporelle importante due aux effets de l'amplification électronique du signal ultrasonore.

Une seconde méthode illustrée par les figures 5A et 5B consiste à utiliser un faisceau d'ondes ultrasonores 27 en incidence oblique de manière que ce faisceau soit d'abord réfléchi par la surface interne du tube, puis par le défaut 28 à l'interface et une seconde fois par la surface interne du tube.

Dans ce cas, l'écho 29 correspondant à la réflexion sur le défaut 28 après une première réflexion sur la surface Interne du tube suivie d'une seconde réflexion sur la surface interne du tube présente un décalage temporel important par rapport à l'écho 24.

De même l'écho 29 et l'écho suivant immédiat 29' réfléchi par la surface interne du tube sont d'amplitude et de largeur temporelle faibles et équivalentes et sont donc facilement séparables.

La mise en oeuvre de cette technique peut cependant être difficile suivant la nature du défaut et dans la mesure où l'on doit opérer en incidence oblique.

Il peut être également nécessaire d'utiliser un transducteur ultrasonore à émetteur et récepteur séparés.

Une troisième méthode de mesure est illustrée par les figures 6A et 6B.

Le contrôle est effectué par l'intérieur du tube et le faisceau ultrasonore est émis en incidence normale de manière à obtenir une réflexion directe sur le défaut 30.

L'écho 31 correspondant à la réflexion sur le défaut 30 présente une amplitude moindre et un décalage temporel important par rapport au signal réfléchi par la surface interne du tube.

De même cet écho 31 et l'écho suivant immédiat 31' issu de la réflexion sur la surface externe du tube sont d'amplitudes et de largeurs temporelles faibles et équivalentes et sont donc facilement séparables.

Cependant, cette méthode de détection est d'une mise en oeuvre difficile dans un contexte industriel, dans la mesure où le contrôle doit être effectué par l'intérieur d'un tube de faible diamètre et de grande longueur.

Il est ainsi difficile d'obtenir des cadences de contrôle suffisantes pour utiliser le procédé dans un cadre industriel.

En outre, l'utilisation d'ultrasons à très hautes fréquences présente des inconvénients dans le cas de l'utilisation du procédé dans un milieu industriel, dans la mesure où ce procédé est sensible aux parasites électroniques.

Les figures 7A, 7B, 8A et 8B illustrent une technique de détection des défauts de décohésion à l'interface entre la couche de placage 3 et l'âme 4 d'un tube duplex 1, par transmission d'une onde ultrasonore dans la paroi du tube duplex constituant une gaine de crayon combustible, l'onde ultrasonore étant ensuite réfléchie sur la surface interne du tube, comme il est visible sur la figure 7A relative à un tube ou une partie de tube ne présentant pas de défaut de décohésion.

Dans ce cas, l'oscillogramme représenté sur la figure 7B comporte un écho de fond 36 dont l'amplitude bien qu'inférieure à l'amplitude de l'écho d'entrée 35 est importante.

L'application de la méthode à un matériau sain se traduit donc par une transmission quasi intégrale de l'onde ultrasonore à l'interface entre la couche de placage 3 et l'âme 4 du tube. La réflexion à l'interface 4 est en effet négligeable, dans la mesure où les impédances acoustiques des matériaux constituant la couche de placage 3 et l'âme 2 sont très voisines.

Dans le cas où un défaut de décohésion 37 est présent à l'interface 4 entre la couche de placage 3' et l'âme 2' d'un tube duplex 1', comme représenté sur la figure 8A, l'onde ultrasonore émise avec une incidence pratiquement normale par rapport à la surface externe du tube ne peut être transmise ou n'est transmise que très partiellement, au niveau du défaut de décohésion 37 situé suivant l'interface 4'.

L'énergie ultrasonore est dissipée par les réflexions successives dans l'épaisseur de la couche de placage 3'.

On obtient alors un écho de fond 36' fortement atténué ou même inexistant

L'écho d'entrée 35' est élargi et traduit la dissipation de l'énergie ultrasonore par réfléxions successives dans la couche de placage.

La méthode permet donc de distinguer très facilement un matériau sain d'un matériau présentant des défauts de décohésion.

Cette technique de détection par transmission peut être appliquée, en utilisant un faisceau d'ondes ultrasonores dont la fréquence se situe dans un intervalle permettant une mise en oeuvre facilitée du procédé de détection, par rapport aux procédés de détection par réflexion qui ont été décrits plus haut.

Ce domaine de fréquences peut être par exemple compris entre 10 et 20 MHz. De plus, il est possible d'utiliser le transducteur d'ultrasons en incidence normale, ce qui présente des avantages pour la facilité de mise en oeuvre du procédé.

Ces conditions correspondent pratiquement à celles qui sont utilisées actuellement dans le cas du contrôle d'épaisseur de la paroi d'une gaine de crayon combustible.

Sur la figure 9, on a représenté un transducteur ultrasonore ou palpeur 40 permettant de détecter des défauts de décohésion à l'interface d'un tube duplex 1.

Le palpeur 40 est conçu de manière à obtenir une focalisation optimisée du faisceau ultrasonore 41.

Les défauts de décohésion à l'interface du tube duplex 1 étant des défauts allongés dans la direction parallèle à l'axe du tube et ayant une surface parallèle à la surface du tube, on cherche à obtenir une tache focale 42 de forme oblongue dont l'axe longitudinal est dirigé avec précision suivant une direction parallèle à l'axe du tube. La surface 43 de la lentille de focalisation du palpeur a la forme d'un secteur cylindrique et le réglage optimal de la tache focale est obtenu en réglant l'orientation du palpeur de manière que l'écho de fond (36 sur la figure 7B) ait une amplitude maximale.

En outre, le palpeur doit être à large bande passante, ce qui est obtenu par un fort amortissement. On obtient ainsi des échos très étroits et de plus, l'écho d'entrée (35 sur la figure 7B) est nettement séparé de l'écho de fond (36 sur la figure 5B). On obtient également une meilleure visualisation de l'élargissement temporel de l'écho d'entrée (écho 35' sur la figure 8B), lors du passage sur un défaut de décohésion tel que le défaut 37 (figure 8A).

Le palpeur 40 est monté sur un ensemble de déplacement mécanique non représenté qui permet, d'une part, d'effectuer un réglage fin de la focalisation du palpeur, de l'alignement de la tache focale par rapport à l'axe du tube, de la hauteur de liquide de couplage tel que de l'eau c'est-à-dire de la distance entre le palpeur et le tube et de l'incidence du faisceau et, d'autre part, de réaliser un guidage précis du tube en défilement dans la direction de son axe sous le palpeur à ultrasons 40.

L'invention, dans ses différents modes de réalisation, permet donc d'effectuer de manière simple, rapide et précise un contrôle de l'épaisseur et de la cohésion de l'interface d'un tube duplex, en utilisant à la fois des techniques de contrôle par ultrasons et des techniques de contrôle par courants de Foucault.

La mise en oeuvre du procédé et du dispositif suivant l'invention peut être facilement réalisée dans un cadre industriel, sur un très grand nombre de tubes de grande longueur et de faible diamètre.

Il est bien évident que l'invention ne se limite pas aux modes de réalisation qui ont été décrits.

C'est ainsi qu'on peut utiliser des domaines de fréquences des ondes ultrasonores différents de ceux qui ont été indiqués et des transducteurs présentant une forme, une structure et des dimensions adaptées aux tubes à contrôler Ces transducteurs ou palpeurs peuvent être associés à des moyens mécaniques de réglage d'un type quelconque.

Le tube peut être déplacé dans sa direction longitudinale par rapport au palpeur par des moyens de guidage et des moyens moteurs d'un type quelconque.

La position du tube et de la zone en cours de contrôle peut être déterminée avec précision par tout moyen adapté.

Il est bien évident également qu'on peut utiliser des dispositifs de mesure d'épaisseur de la couche de placage par courants de Foucault d'un type différent de ceux qui ont été décrits.

Les modules de traitement et les moyens informatiques associés au palpeur de contrôle ultrasonore et aux moyens de mesure par courants de Foucault peuvent être constitués de composants dassiques assurant la numérisation et le traitement des signaux, les calculs d'épaisseur, l'affichage des résultats sous une forme quelconque et l'indication de la présence de défauts, sous la forme de messages facilement exploitables.

Enfin, l'invention s'applique au contrôle de tout tube duplex utilisé comme élément de gainage de crayons combustibles d'assemblages pour réacteurs nucléaires ou dans d'autres domaines de l'industrie.

De même ces types de contrôle peuvent s'appliquer d'autant plus facilement à des diamètres et épaisseurs de tubes plus Importants ; la limite supéfleure est fixée par la technique à courants de Foucault de mesure de l'épaisseur de placage et cette épaisseur limite est généralement d'environ 2 mm dans le cas des alliages de zirconium mentionnés ci-dessus.

**Revendications**

1. Procédé de contrôle de l'épaisseur et de la cohésion de l'interface (4) d'un tube duplex (1, 1') comportant une âme tubulaire (2, 2') en un alliage tel qu'un alliage de zirconium recouverte par une couche (3, 3') de revêtement ou de placage en un alliage dont le métal de base est identique au métal de base de l'alliage constituant l'âme tubulaire (2, 2') dans lequel, pour différentes zones de mesure et de comme suivant la circonférence ou la longueur du tube et de manière continue ou discontinue :

- on émet des ondes ultrasonores de manière que ces ondes se propagent dans le revêtement ou placage (3) et dans l'âme (2) du tube (1), dans des directions sensiblement radiales,
- on recueille les ondes ultrasonores réfléchies par les surfaces interne et externe du tube (1), par son interface (4) entre l'âme (2) et le revêtement (3) et par des défauts de cohésion éventuels (20, 28, 30, 37) à l'interface (4, 4'), ou transmises par la couche de revêtement ou de placage (3, 3'),
- on mesure les temps de propagation des ondes ultrasonores dans l'épaisseur du tube (1),
- on détermine l'amplitude et la forme des ondes réfléchies,

caractérisé par le fait que, dans les zones de mesure,

- on soumet le tube (1, 1'), depuis sa surface externe, à une induction magnétique créée par un courant sinusoïdal multifréquences,
- on effectue des mesures de phase et/ou d'amplitude des courants induits dans le tube (1, 1') appelés courants de Foucault,
- on en déduit l'épaisseur de la couche de revêtement (3, 3'),
- on calcule l'épaisseur totale $e_g$ du tube duplex (1), à partir de la formule :

$$e_g = e_p + (\delta t - e_p/V_p) \times V_a$$

dans laquelle :

$e_p$ représente l'épaisseur de la couche de revêtement ou de placage mesurée par courants de Foucault,
$V_p$ la vitesse des ondes ultrasonores dans la couche de placage ou de revêtement,
$V_a$ la vitesse des ondes ultrasonores dans le matériau constituant l'âme du tube,
et $\delta t$ le temps de propagation des ondes ultrasonores dans l'épaisseur totale du tube.

- et on détermine la cohésion du tube à son interface (4, 4') par analyse de l'amplitude et de la forme des ondes ultrasonores réfléchies par l'interface (4, 4') ou transmises par la couche de revêtement ou de placage (3, 3').

**2.** Procédé suivant la revendication 1, caractérisé par le fait que la fréquence des ondes ultrasonores utilisée est comprise entre 10 et 20 MHz.

**3.** Procédé suivant l'une quelconque des revendications 1 et 2, caractérisé par le fait que le courant sinusoïdal multifréquence présente une fréquence principale déterminée de façon à optimiser la sensibilité aux variations d'épaisseur de la couche de revêtement ou de placage (3, 3') et à minimiser les variations des signaux correspondant aux courants induits dues aux variations d'entrefer, lorsque le tube est soumis à une induction magnétique créée par le courant sinusoïdal multifréquences,
ainsi qu'au moins une seconde fréquence complémentaire sensible à la variation de conductivité d'au moins l'un des alliages constituant l'âme (2, 2') ou la couche de placage (3, 3') du tube (1, 1') et très peu sensible aux variations d'épaisseur du matériau de l'âme (2, 2') ou du placage (3, 3').

**4.** Procédé suivant la revendication 3, caractérisé par le fait que le signal d'excitation multifréquence comporte une seconde fréquence complémentaire sensible à la variation moyenne de conductivité des alliages constituant l'âme (2, 2') et la couche de placage ou de revêtement (3, 3') du tube, tout en étant très peu sensible aux variations d'épaisseur de l'âme (2, 2') et du placage (3, 3').

**5.** Procédé suivant la revendication 3, caractérisé par le fait que le signal d'excitation multifréquence comporte deux fréquences secondaires complémentaires dont l'une est sensible à la variation de conductivité de l'alliage constituant l'âme (2, 2') du tube et très peu sensible aux variations de conductivité de l'alliage constituant la couche de placage ou de revêtement (3, 3') et aux variations d'épaisseur de l'âme (2, 2') et du placage (3, 3') et dont l'autre est sensible uniquement aux variations de la conductivité de l'alliage constituant la couche de placage ou de revêtement (3, 3').

**6.** Procédé suivant l'une quelconque des revendications 3, 4 et 5, caractérisé par le fait que le signal multifréquence présente une fréquence complémentaire sensible aux variations d'entrefer.

**7.** Procédé suivant l'une quelconque des revendications 1 à 6, caractérisé par le fait que la cohésion du tube (1, 1') à son interface (4, 4') est déterminée par détection de défauts de cohésion (37), par transmission d'ondes ultrasonores à travers la couche de revêtement ou de placage (3, 3') et l'interface (4, 4'), la présence d'un défaut de cohésion (37) à l'interface (4, 4') se traduisant par un élargissement de l'écho d'entrée (35') obtenu par réflexion sur la surface externe du tube et à l'interface (4') ainsi que par un très fort affaiblissement ou une disparition de l'écho de fond (36') obtenu par réflexion des ondes ultrasonores sur la paroi interne du tube (1').

**8.** Dispositif de contrôle de l'épaisseur et de la cohésion de l'interface d'un tube duplex (1, 1') comportant une âme tubulaire (2, 2') en un alliage tel qu'un alliage de zirconium recouverte extérieurement par une couche de revêtement ou de placage (3, 3') en un alliage dont le métal de base est identique au métal de base de l'alliage constituant l'âme tubulaire (2, 2') pour la mise en oeuvre du procédé de la revendication 1, le dispositif comportant au moins un transducteur d'ultrasons (5, 40) et au moins une bobine d'induction (10, 14, 15) reliée pour son alimentation en courants d'excitation à une source de courant alternatif multifrequence (11, 11'), des moyens mécaniques de guidage précis et d'entraînement du tube (1, 1') pour son déplacement dans la direction de son axe, à travers une tête de contrôle contenant la bobine d'induction (10, 14, 15) et en vis-à-vis du transducteur d'ultrasons (5, 40), et des moyens de traitement combiné (7, 12) des signaux reçus par le transducteur 5, 40) et des signaux correspondant aux courants induits dans le tube (1, 1') par la bobine (10, 14, 15) pour déterminer l'épaisseur totale du tube (1, 1') et la cohésion de l'interface.

**9.** Dispositif suivant la revendication 8, caractérisé par le fait que la bobine d'excitation (10) comporte des spires encerclant le tube (1) et disposées successivement suivant la direction axiale du tube (1).

**10.** Dispositif suivant la revendication 8, caractérisé par le fait que la bobine (14) présente un axe dirigé suivant une direction sensiblement radiale du tube (1).

**11.** Dispositif suivant la revendication 10, caractérisé par le fait qu'il comporte une pluralité de bobines (15) dont les axes d'enroulement sont dirigés dans des directions radiales par rapport au tube (1) fixées dans des positions circonférentielles espacées les unes des autres, sur un support (16) encerclant le tube (1).

**12.** Dispositif suivant la revendication 8, caractérisé par le fait que le transducteur (40) comporte une lentille de focalisation en forme de portion de cylindre, de manière à focaliser le faisceau d'ultrasons suivant une tache focale (42) de forme oblongue dont l'axe longitudinal est parallèle à l'axe du tube (1).

## Patentansprüche

1. Verfahren zur Kontrolle der Dicke und der Kohäsion der Verbindung (4) eines Duplexrohrs (1, 1'), welches einen aus einer Legierung, beispielsweise einer Zirkon-Legierung, bestehenden Rohrkern (2, 2') aufweist, der mit einer aus einer Legierung mit dem gleichen Grundmetall wie das des Rohrkerns (2, 2') bestehenden Belag- oder Veredelungsschicht (3, 3') überzogen ist, in welchem man für verschiedene Meß- oder Kontrollzonen entsprechend dem Kreisumfang oder der Länge des Rohrs kontinuierlich oder nicht kontinuierlich:

   - Ultraschallwellen aussendet und zwar dergestalt, daß diese Wellen sich in der Belag- oder Veredelungsschicht (3) und dem Kern (2) des Rohrs (1) in ungefähr strahlenförmige Richtung ausbreiten,
   - die durch die Innen- und Außenfläche des Rohrs (1), durch seine Verbindung (4) zwischen dem Kern (2) und dem Belag (3) und durch eventuelle Kohäsionsfehler (20, 28, 30, 37) an der Verbindung (4, 4') reflektierten bzw. durch die Belag- oder Veredelungsschicht (3, 3') übertragenen Ultraschallwellen auffängt,
   - die Ausbreitungszeiten der Ultraschallwellen in der Dicke des Rohrs (1) mißt,
   - die Amplitude und die Form der reflektierten Wellen bestimmt,

   **dadurch gekennzeichnet,**
   daß man in den Meßzonen

   - das Rohr (1, 1') von seiner Außenfläche aus einer durch Multifrequenz-Sinusoidalstrom erzeugten magnetischen Induktion aussetzt,
   - Phasen- und/oder Amplituden-Messungen der in das Rohr (1, 1') induzierten Ströme, der sogenannten Foucault-Ströme, durchführt,
   - daraus die Dicke der Belagschicht (3, 3') ableitet,
   - die Gesamtdicke eg des Duplexrohrs (1) errechnet, nach der Formel:

   $$e_g = e_p + (\delta t - e_p/V_p) \times V_a$$

   in welcher:

   $e_p$ die Dicke der durch die Foucault-Ströme gemessenen Belag- bzw. Veredelungsschicht,
   $V_p$ die Geschwindigkeit der Ultraschallwellen in der Belag- oder Veredelungsschicht,
   $V_a$ die Geschwindigkeit der Ultraschallwellen in dem Werkstoff, aus dem der Rohrkern besteht,

   und $\delta t$ die Ausbreitungszeit der Ultraschallwellen in der Gesamtdicke des Rohrs darstellt,

   - und die Kohäsion des Rohrs an seiner Verbindung (4, 4') durch die Analyse der Amplitude und der Form der von der Verbindung (4, 4') reflektierten oder durch die Belag- oder Veredelungsschicht übertragenen Ultraschallwellen bestimmt.

2. Verfahren nach Anspruch 1, **dadurch gekennzeichnet**, daß die Frequenz der eingesetzten Ultraschallwellen zwischen 10 und 20 Mhz liegt.

3. Verfahren nach einem beliebigen der Ansprüche 1 und 2, **dadurch gekennzeichnet,**, daß der Multifrequenz-Sinusoidalstrom eine bestimmte Hauptfrequenz aufweist, um die Empfindlichkeit gegen Schwankungen der Dicke der Belag- oder Veredelungsschicht (3, 3') zu optimieren und die durch die Abstandsschwankungen entstandenen Schwankungen der den induzierten Strömen entsprechenden Signale zu minimieren, wenn das Rohr einer durch Multifrequenz-Sinusoidalstrom erzeugten magnetischen Induktion ausgesetzt wird, sowie mindestens eine ergänzende zweite Frequenz aufweist, die empfindlich gegen Schwankungen der Leitfähigkeit von zumindest einer der den Kern (2, 2') oder die Veredelungsschicht (3, 3') des Rohrs (1, 1') bildenden Legierungen und sehr wenig empfindlich gegen Schwankungen der Werkstoffdicke des Kerns (2, 2') oder der Veredelung (3, 3') ist.

4. Verfahren nach Anspruch 3, **dadurch gekennzeichnet,**, daß das Multifrequenz-Erregungssignal eine ergänzende zweite Frequenz aufweist, die empfindlich gegen die mittlere Leitfähigkeits-Schwankung der den Kern (2, 2') und die Veredelungs- oder Belagschicht (3, 3') des Rohrs bildenden Legierung, und gleichzeitig sehr wenig empfindlich gegen Schwankungen der Dicke des Kerns (2, 2') und der Veredelung (3, 3') ist.

5. Verfahren nach Anspruch 3, **dadurch gekennzeichnet,**, daß das Multifrequenz-Erregungssignal zwei ergänzende zweite Frequenzen aufweist, von denen eine empfindlich gegen die Schwankung der Leitfähigkeit der den Rohrkern (2, 2') bildenden Legierung und sehr wenig empfindlich gegen Schwankungen der Leitfähigkeit der die Veredelungs- oder Belagschicht (3, 3') bildenden Legierung und gegen Schwankungen der Dicke des Kerns (2, 2') und der Veredelung (3, 3') und die andere allein empfindlich gegen Schwankungen der Leitfähigkeit der die Veredelungs-oder Belagschicht (3, 3') bildenden Legierung ist.

**6.** Verfahren nach einem beliebigen der Ansprüche 3, 4 und 5, **dadurch gekennzeichnet,**, daß das Multifrequenz-Signal eine ergänzende, gegen die Abstandsschwankungen empfindliche Frequenz aufweist.

**7.** Verfahren nach einem beliebigen der Ansprüche 1 bis 6, **dadurch gekennzeichnet,**, daß die Kohäsion des Rohrs (1, 1') an seiner Verbindung (4, 4') durch das Aufspüren von Kohäsionsfehlern (37), die Übertragung der Ultraschallwellen durch die Belag- oder Veredelungsschicht (3, 3') und die Verbindung (4, 4') bestimmt wird, wobei das Auftreten eines Kohäsionsfehlers (37) an der Verbindung (4, 4') eine Ausdehnung des durch Reflektieren auf die Außenfläche des Rohrs und an der Verbindung (4') erzeugten Eingangsechos (35') sowie eine sehr starke Abschwächung bzw. ein Verschwinden des durch Reflektieren der Ultraschallwellen auf die Innenwand des Rohrs (1') erzeugten Hintergrundechos (36') zur Folge hat.

**8.** Vorrichtung zur Kontrolle der Dicke und der Kohäsion der Verbindung eines Duplexrohrs (1, 1'), welches einen aus einer Legierung, wie beispielsweise einer Zirkon-Legierung, bestehenden Rohrkern (2, 2') aufweist, der mit einer aus einer Legierung mit dem gleichen Grundmetall wie das des Rohrkerns (2, 2') bestehenden Belag- oder Veredelungsschicht (3, 3') überzogen ist, wobei die Vorrichtung für die Durchführung des Verfahrens nach Anspruch 1 mindestens einen Ultraschallwandler (5, 40) aufweist, mindestens eine für ihre Erregerstromversorgung mit einer Multifrequenz-Wechselstromquelle (11, 11') verbundene Induktionsspule (10, 14, 15), mechanische Mittel zur präzisen Führung und zum Antrieb des Rohrs (1, 1') für seine Bewegung in Achsrichtung quer durch einen Prüfkopf, der die Induktionsspule (10, 14) umfaßt, sowie gegenüber dem Ultraschallwandler (5, 40), und Mittel zur gemeinsamen Verarbeitung (7, 12) der vom Ultraschallwandler (5, 40) aufgenommenen Signale und der Signale, die den durch die Spule (10, 14, 15) in das Rohr (1, 1') induzierten Strömen entsprechen, um die Gesamtdicke des Rohrs und die Kohäsion der Verbindung zu bestimmen.

**9.** Vorrichtung nach Anspruch 8, **dadurch gekennzeichnet**, daß die Erregerspule (10) Windungen aufweist, die das Rohr (1) einkreisen und nacheinander entsprechend der Axialrichtung des Rohrs (1) angeordnet sind.

**10.** Vorrichtung nach Anspruch 8, **dadurch gekennzeichnet**, daß die Spule (14) eine in eine ungefähr strahlenförmige Richtung des Rohrs (1) gerichtete Achse besitzt.

**11.** Vorrichtung nach Anspruch 10, **dadurch gekennzeichnet**, daß sie eine Vielzahl von Spulen (15) aufweist, deren Wicklungsachsen in strahlenförmige Richtungen in Bezug auf das Rohr (1) gerichtet und mit Abstand zueinander auf dem Kreisumfang positioniert auf einer das Rohr (1) umgebenden Halterung (16) befestigt sind.

**12.** Vorrichtung nach Anspruch 8, **dadurch gekennzeichnet**, daß der Ultraschallwandler (40) eine zylinderabschnittförmige Fokalisierungslinse aufweist, um das Ultraschallbündel auf einen Fokuspunkt (42) länglicher Form zu richten, dessen Längsachse sich parallel zur Rohrachse (1) befindet.

**Claims**

**1.** Method for checking the thickness and the cohesion of the interface (4) of a duplex tube (1, 1') comprising a tubular core (2, 2') made from an alloy such as a zirconium alloy covered with a covering or cladding layer (3, 3') made from an alloy, the base metal of which is identical to the base metal of the alloy constituting the tubular core (2, 2') in which, for various measuring and checking zones around the circumference or along the length of the tube and continuously or discontinuously:

- ultrasonic waves are emitted in such a way that these waves are propagated in the covering or cladding (3) and in the core (2) of the tube (1), in substantially radial directions,
- the ultrasonic waves reflected by the inner and outer surfaces of the tube (1), by its interface (4) between the core (2) and the covering (3) and by any flaws in cohesion (20, 28, 30, 37) at the interface (4, 4') or transmitted by the covering or cladding layer (3, 3'), are collected,
- the propagation times of the ultrasonic waves in the thickness of the tube (1) are measured,
- the amplitude and shape of the reflected waves is determined,

characterised in that, in the measuring zones,

- the tube (1, 1') is subjected, from its outer surface, to a magnetic induction created by a multifrequency sinusoidal current,
- measurements are taken of the phase and/or amplitude of the currents induced in the tube (1, 1') termed Foucault currents,
- the thickness of the covering layer (3, 3') is deduced therefrom,
- the total thickness $e_g$ of the duplex tube (1) is calculated from the formula:

$$e_g = e_p + (\delta t - e_p/V_p) \times V_a$$

in which:

$e_p$ represents the thickness of the covering or cladding layer measured by Foucault currents,

$v_p$ represents the speed of the ultrasonic waves in the covering or cladding layer,

$v_a$ represents the speed of the ultrasonic waves in the material constituting the core of the tube,

and $\delta t$ represents the propagation time of the ultrasonic waves in the total thickness of the tube.

- and the cohesion of the tube at its interface (4, 4') is determined by analysing the amplitude and the shape of the ultrasonic waves reflected by the interface (4, 4') or transmitted by the covering or cladding layer (3, 3').

2. Method according to Claim 1, characterised in that the frequency of the ultrasonic waves used is between 10 and 20 MHz.

3. Method according to either of Claims 1 and 2, characterised in that the multifrequency sinusoidal current has a main frequency which is determined so as to optimise the sensitivity to the variations in thickness of the covering or cladding layer (3, 3') and to minimise the variations in the signals corresponding to the induced currents caused by variations in the air gap, when the tube is subjected to a magnetic induction created by the multifrequency sinusoidal current, as well as at least once complementary second frequency which is sensitive to the variation in conductivity of at least one of the alloys constituting the core (2, 2') or the cladding layer (3, 3') of the tube (1, 1') and very slightly sensitive to the variations in thickness of the material of the core (2, 2') or of the cladding (3, 3').

4. Method according to Claim 3, characterised in that the multifrequency excitation signal has a complementary second frequency sensitive to the mean variation in conductivity of the alloys constituting the core (2, 2') and the cladding or covering layer (3, 3') of the tube, whilst at the same time being very slightly sensitive to the variations in thickness of the core (2, 2') and of the cladding (3, 3').

5. Method according to Claim 3, characterised in that the multifequency excitation signal has two complementary second frequencies, one of which is sensitive to the variation in conductivity of the alloy constituting the core (2, 2') of the tube and very slightly sensitive to the variations in conductivity of the alloy constituting the cladding or covering layer (3, 3') and to the variations in thickness of the core (2, 2') and of the cladding (3, 3') and the other of which is sensitive only to the variations in the conductivity of the alloy constituting the cladding or covering layer (3, 3').

6. Method according to one of Claims 3, 4 and 5, characterised in that the multifrequency signal has a complementary frequency sensitive to the variations in the air gap.

7. Method according to one of Claims 1 to 6, characterised in that the cohesion of the tube (1, 1') at its interface (4, 4') is determined by detecting flaws in cohesion (37), by transmitting ultrasonic waves through the covering or cladding layer (3, 3') and the interface (4, 4'), the presence of a flaw in cohesion (37) at the interface (4, 4') being manifested by widening of the input echo (35') obtained by reflection on the outer surface of the tube and at the interface (4'), and by a very considerable weakening or disappearance of the bottom echo (36') obtained by reflection of the ultrasonic waves on the liner wall of the tube (1').

8. Device for checking the thickness and cohesion of the interface of a duplex tube (1, 1') comprising a tubular core (2, 2') made from an alloy such as a zirconium alloy covered on the outside by a covering or cladding layer (3, 3') made from an alloy, the base metal of which is identical to the base metal of the alloy constituting the tubular core (2, 2'), a device comprising at least one ultrasound transducer (5, 40) and at least one induction winding (10, 14, 15), connected for its supply with exciting current to a source of multifrequency alternating current (11, 11'), precise mechanical methods of guiding and driving the tube (1, 1') for its displacement in the direction of its axis, through a control head containing the induction winding (10, 14, 15) and facing the ultrasound transducer (5, 40), and means of combined treatment (7, 12) of the signals received by the transducer (5, 40) and signals corresponding to the currents induced in the tube (1, 1') by the winding (10, 14, 15) to determine the total thickness of the tube (1, 1') and the cohesion of the interface for the implementation of the procedure of claim 1.

9. Device according to Claim 8, characterized in that the exciting coil (10) has turns encircling the tube (1) and arranged successively in the add direction of the tube (1).

10. Device according to claim 8, characterised by the fact that the coil (14) has an axis directed in a substantially radial direction of the tube (1).

11. Device according to Claim 10, characterised by the fact that it comprises a plurality of coils (15), the winding axes of which are directed in radial directions with respect to the tube (1) and which are fixed in circumferential positions spaced apart from one another, on a support (16) encircling the tube (1).

12. Device according to Claim 8, characterised by the fact that the transducer (40) comprises a focusing lens in the form of a portion of a cylinder, in order to focus the ultrasound beam at a focal spot (42) of oblong shape, the longitudinal axis of which is parallel to the axis of the tube (1).

FIG.1

FIG.2A

FIG.2B

FIG.3A

12

11

13

1

10

FIG.3B

12'

11'

1

14

FIG.3C

15

16

1

15

FIG.4A

FIG.5A

FIG.6A

FIG.4B

FIG.5B

FIG.6B

FIG.7A

FIG.8A

FIG.7B

FIG.8B

FIG.9